(19) Europäisches Patentamt
European Patent Office
Office européen des brevets

(11) **EP 3 458 699 B1**

(12) **EUROPÄISCHE PATENTSCHRIFT**

(45) Veröffentlichungstag und Bekanntmachung des Hinweises auf die Patenterteilung:
**30.03.2022   Patentblatt 2022/13**

(21) Anmeldenummer: **17723694.0**

(22) Anmeldetag: **16.05.2017**

(51) Internationale Patentklassifikation (IPC):
**F02D 41/24** *(2006.01)*

(52) Gemeinsame Patentklassifikation (CPC):
**F02D 41/2432;** F02D 41/2483

(86) Internationale Anmeldenummer:
**PCT/EP2017/061658**

(87) Internationale Veröffentlichungsnummer:
**WO 2017/198638 (23.11.2017 Gazette 2017/47)**

(54) **VERFAHREN ZUR KALIBRIERUNG EINES TECHNISCHEN SYSTEMS**

METHOD FOR CALIBRATING A TECHNICAL SYSTEM

PROCÉDÉ D'ÉTALONNAGE D'UN SYSTÈME TECHNIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **17.05.2016   AT 504502016**

(43) Veröffentlichungstag der Anmeldung:
**27.03.2019   Patentblatt 2019/13**

(73) Patentinhaber: **AVL List GmbH**
**8020 Graz (AT)**

(72) Erfinder:
• **DIDCOCK, Nico**
**8020 Graz (AT)**
• **HAMETNER, Christoph**
**1020 Wien (AT)**
• **JAKUBEK, Stefan**
**1230 Wien (AT)**

(74) Vertreter: **Patentanwälte Pinter & Weiss OG**
**Prinz-Eugen-Straße 70**
**1040 Wien (AT)**

(56) Entgegenhaltungen:
WO-A1-2014/187828      WO-A2-2013/087307
DE-A1-102009 037 254      DE-B3-102004 026 583

• **Vom Fachbereich: "Emission Modelling and Model-Based Optimisation of the Engine Control", , 25. Februar 2013 (2013-02-25), XP055281312, Gefunden im Internet: URL:http://tuprints.ulb.tu-darmstadt.de/3948/1/Emission Modelling and Model-Based Optimisation of the Engine Control - Dissertation Heiko Sequenz.pdf [gefunden am 2016-06-16]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 458 699 B1

**Beschreibung**

Die gegenständliche Erfindung betrifft ein Verfahren zur Kalibrierung eines technischen Systems, das durch eine Anzahl von Steuervariablen gesteuert wird und sich in Abhängigkeit der Steuervariablen ein Betriebspunkt in Form einer Anzahl von Zustandsvariablen einstellt, wobei bei der Kalibrierung in einem i-ten Betriebspunkt durch eine Optimierung unter Einhaltung vorgegebener Nebenbedingungen die Steuervariablen gesucht werden, die hinsichtlich zumindest einer Ausgangsgröße des technischen Systems optimal sind, wobei mit einer Nebenbedingung der Optimierung geprüft wird, ob ein bei der Optimierung berechneter Testpunkt mit Steuervariablen innerhalb einer Datenhülle um eine Anzahl vorhandener Datenpunkte des technischen Systems liegt.

Bei der Kalibrierung eines Verbrennungsmotors geht es im Allgemeinen darum, bestimmte vorgebebene Steuervariablen des Verbrennungsmotors in Abhängigkeit von Zustandsvariablen des Verbrennungsmotors so festzulegen, sodass bestimmte Vorgaben, wie z.B. Emissionsgrenzen oder Verbrauchsgrenzen (allgemein Ausgangsgrößen), eingehalten werden und dabei unzulässige Betriebszustände des Verbrennungsmotors vermieden werden. Steuervariablen sind dabei Variablen, über die der Verbrennungsmotor geregelt wird, also beispielswiese ein Zündzeitpunkt, ein Einspritzzeitpunkt (z.B. Voreinspritzung, Nacheinspritzung), die Menge an rückgeführtem Abgas eines EGR (Exhaust Gas Recirculation), die Stellung einer Drosselklappe, etc. Zustandsvariablen sind Größen des Verbrennungsmotors, die sich in Abhängigkeit der Steuervariablen und in Abhängigkeit von äußeren Einflüssen (wie z.B. eine Last, Umgebungsbedingungen, usw.) einstellen. Typische Zustandsvariablen eines Verbrennungsmotors sind die Drehzahl und das Drehmoment. Die Zustandsvariablen bilden einen Betriebszustand des Verbrennungsmotors ab. Die Zustandsvariablen können gemessen werden, können aber auch, z.B. anhand von Modellen, aus anderen Messgrößen des Verbrennungsmotors berechnet werden. Die Steuervariablen und die Zustandsvariablen bilden gemeinsam die Eingangsgrößen der Kalibrierung, in Form eines Eingangsgrößenvektors aller Steuervariablen und Zustandsvariablen. Unzulässige Betriebszustände werden beispielsweise anhand physikalisch messbarer Ausgangsgrößen, wie z.B. ein Verbrauch, eine Emission (NOx, COx, Ruß, etc.), ein Zylinderdruck, eine Motortemperatur, usw. festgestellt. Dazu werden in der Regel entsprechende Grenzwerte der messbaren Ausgangsgrößen vorgegeben. Die Ausgangsgrößen stellen sich in Abhängigkeit von aktuellen Betriebszustand (Zustandsvariablen) und den aktuellen Steuervariablen als Reaktion des Verbrennungsmotors ein. Ein unzulässiger Betriebszustand des Verbrennungsmotors kann sich aber auch an Effekten wie Klopfen, Fehlzündungen, usw. manifestieren. Solche unzulässige Betriebszustände treten dabei bei bestimmten Kombinationen von Eingangsgrößen auf. Bei der Kalibrierung eines Verbrennungsmotors gilt es nun, die Steuervariablen für gegebene Zustandsvariablen so festzulegen, dass möglichst keine unzulässigen Betriebszustände auftreten und gleichzeitig gewisse Ausgangsgrößen (Ziele der Kalibrierung) optimiert (in der Regel minimiert) werden, typischerweise Emissionswerte (NOx, COx, HC (Kohlenwasserstoff) Anteil im Abgas, Ruß, Feinstaub, etc.) und Verbrauch. Als Versuchsraum wird bei der Kalibrierung der mehrdimensionale (gemäß der Anzahl der Steuervariablen) Raum bezeichnet, der durch die Steuervariablen aufgespannt wird. Alle zulässigen Steuervariablen des Versuchsraums bilden den fahrbaren Bereich, innerhalb der die Steuervariablen für gegebene Zustandsvariablen liegen müssen, um keine unzulässigen Betriebszustände hervorzurufen. Der fahrbare Bereich, der von den aktuellen Zustandsvariablen abhängig ist, ist damit ein Unterraum des Versuchsraumes. Der äußere Rand des fahrbaren Bereichs wird häufig auch als Fahrbarkeitsgrenze bezeichnet.

Die Steuervariablen sind dabei häufig in Steuergeräten hinterlegt, beispielsweise als Kennfelder in Abhängigkeit von den Zustandsvariablen. Für einen Verbrennungsmotor sind die Steuervariablen z.B. einem Motorsteuergerät hinterlegt.

Heutige Verbrennungsmotoren haben eine Vielzahl von Steuervariablen, die in Abhängigkeit einer Vielzahl von Zustandsvariablen eingestellt werden. Aufgrund der sich damit ergebenden Vielzahl der Eingangsgrößen, der üblicherweise nichtlinearen Einflüsse der Steuervariablen auf die Betriebszustände des Verbrennungsmotors und auch aufgrund der, auch mehrfachen, Abhängigkeiten der Eingangsgrößen (weil die Fahrbarkeitsgrenze eingehalten werden muss) untereinander ist die Kalibrierung eine sehr komplexe Aufgabenstellung, die manuell kaum zu bewerkstelligen ist. Die Kalibrierung wird daher häufig als Optimierungsproblem gelöst, wobei die Eingangsgrößen hinsichtlich einer oder mehrere Ausgangsgrößen optimiert (minimiert oder maximiert) werden. Bei der Optimierung werden für vorgegebene Zustandsvariablen die Steuervariablen variiert, um die Ausgangsgrößen zu optimieren. Als Ausgangsgröße werden bei der Kalibrierung eines Verbrennungsmotors häufig Emissionswerte oder der Verbrauch herangezogen. Dabei werden bei der Optimierung auch Nebenbedingungen vorgegeben, insbesondere auch die Einhaltung der Fahrbarkeitsgrenze. D.h., dass bei der Optimierung die Steuervariablen nur innerhalb der Fahrbarkeitsgrenze liegen dürfen. Auf diese Weise werden in der Regel Kennfelder für die Steuervariablen in Abhängigkeit von den Zustandsvariablen erstellt, die im Motorsteuergerät des Verbrennungsmotors zum Steuern des Verbrennungsmotors hinterlegt werden. Im Fahrbetrieb werden die aktuellen Zustandsvariablen erfasst und aus den Kennfeldern die vorzunehmenden Einstellungen für die Steuervariablen entnommen.

Ein Problem dabei ist, dass man zur Kalibrierung nur eine begrenzte, diskrete Anzahl von Datenpunkten der Eingangsgrößen (ein Datenpunkt ist hierbei ein konkreter Eingangsgrößenvektor) zur Verfügung hat. Diese Datenpunkte werden dabei entweder aus Modellen berechnet oder auf einem Prüfstand am real vorhandenen und betriebenen Verbrennungsmotor gemessen. Damit hat man aber auch nur einzelne Punkte der Fahrbarkeitsgrenze verfügbar. Ob nun eine aus der Optimierung neu bestimmte Steuervariable, in den meisten Fällen ein Steuervariablenvektor mit mehreren Steuervariablen, innerhalb der Fahrbarkeitsgrenze liegt, oder außerhalb, kann daher anhand der vorhandenen diskreten Datenpunkte nicht ermittelt werden. Daher wurden schon sogenannten Datenhüllen verwendet, die aus einer begrenzten Anzahl von Datenpunkten eine Einhüllende der Datenpunkte, die sogenannte Datenhülle, berechnet. Die Fahrbarkeitsgrenze wird damit von der Datenhülle gebildet. Um dieses Problem zu lösen wurden schon verschiedene Methoden vorgeschlagen.

Ein erster bekannter Ansatz ist die Verwendung sogenannten Klassifikatoren. Ein Klassifikator ordnet jedem Datenpunkt im Versuchsraum entweder das Attribut "gültig" bzw. "ungültig" zu. Es gibt verschiedene Modellstrukturen für Klassifikatoren für die Bestimmung der Fahrbarkeitsgrenze, z.B. Support Vektor Maschinen wie beispielsweise in G. Kampmann, et al., "Support Vector Machines for Design Space Exploration", Proceedings of the World Congress on Engieneering and Computer Science 2012, 24.-26. Oktober 2012, Vol II beschrieben. Dafür sind allerdings Datenpunkte aus beiden Klassen, also sowohl gültige, als auch ungültige Datenpunkte erforderlich. Bei der Kalibrierung eines Verbrennungsmotors ist es allerdings meistens der Fall, dass nur gültige Datenpunkte (also Datenpunkte innerhalb der Fahrbarkeitsgrenze) zur Verfügung stehen, weshalb Klassifikatoren für diese Anwendung in der Regel ungeeignet sind.

Daher sind auch schon Hüllenalgorithmen bekannt geworden, die die Datenhüllen ausschließlich aus den vorhandenen zulässigen Datenpunkten berechnen. Ein Beispiel hierfür ist die konvexe Datenhülle, die als der kleinste, konvexe Raum definiert ist, welcher die vorhandenen Datenpunkte enthält. Die Verwendung der konvexen Datenhülle ist aber aus zweierlei Gründen problematisch. Erstens, ist die Berechnung der konvexen Hülle nur in niedrigdimensionalen Versuchsräumen effizient. Der Berechnungsaufwand steigt jedoch exponentiell mit der Dimension des Versuchsraumes, aber auch mit der Anzahl der Datenpunkte, an, sodass eine Berechnung ab ca. 10-dimensionalen Versuchsräumen bereits praktisch unmöglich ist. Zweitens sind die relevanten Bereiche des Versuchsraums in der Praxis oft nicht konvex, was zu unrealistischen Datenhüllen führt. Dieses Problem wird oftmals durch etwas komplexere Triangulationen gelöst. Unter einer Triangulation versteht man die Aufteilung der konvexen Datenhülle in einfache Formen, also im zweidimensionalen Fall etwa die Triangulation der Datenpunkte in Dreiecksnetze. Ein Beispiel für nicht-konvexe Triangulationen sind die sogenannten Alpha-Shapes, wie beispielsweise in H. Edelsbrunner, et al., "Three-Dimensional Alpha Shapes", ACM Transactions on Graphics, Vol.13, No. 1, Jan. 1994, Seiten 43-72 beschrieben. Die Berechnung dieser Triangulationen ist aber für höhere Dimensionen, und auch für eine hohe Anzahl von Datenpunkten, ebenfalls sehr komplex und aufwendig.

Speziell bei der Kalibrierung eines Verbrennungsmotors sind in der Regel aber 10 bis 20 Steuervariablen (Dimension des Versuchsraumes >10) zu verarbeiten. Gleichfalls sind $10^5$ bis $10^6$ verfügbare Datenpunkte für die Kalibrierung keine Seltenheit. Beides macht die Berechnung einer konvexen Datenhülle bei der Kalibrierung praktisch unmöglich, zumindest mit vertretbarem Aufwand und in vertretbarer Zeit.

Die obigen Probleme treten nicht nur bei der Kalibrierung eines Verbrennungsmotors als technisches System auf, sondern können natürlich auf ein beliebiges technisches System übertragen werden, wobei das technische System aufgrund einer Vorgabe von Steuervariablen gesteuert wird und in Abhängigkeit von der Vorgabe der Steuervariablen einen bestimmten durch Zustandsvariablen, und gegebenenfalls in Abhängigkeit von äußeren Einflüssen, definierten Zustand einnimmt. Bei der Kalibrierung des technischen Systems ist es das Ziel, die Steuervariablen in Abhängigkeit von den Zustandsvariablen, und gegebenenfalls in Abhängigkeit von äußeren Einflüssen, so vorzugeben, dass möglichst keine unzulässigen Betriebszustände auftreten und gleichzeitig vorgegebene Ausgangsgrößen des technischen Systems hinsichtlich eines Optimierungsziels optimiert werden. Bei der Kalibrierung werden in der Regel Datenfelder oder Datentabellen erzeugt, anhand derer das technische System gesteuert werden kann. Diese Datenfelder oder Datentabellen werden dabei in der Regel in einem Steuergerät des technischen Systems gespeichert, um im Betrieb die für den jeweiligen Betriebszustand optimalen Steuervariablen auslesen zu können. Typische Beispiele von Komponenten eines Fahrzeugs, die mit zugehörigen Steuergeräten gesteuert werden, sind neben dem Verbrennungsmotor ein Getriebe, eine Antriebsbatterie, Bremsen, ein Antriebsstrang, eine Radaufhängung, etc.

Die erfindungsgemäße Kalibrierung kann aber auch zur Optimierung des Verhaltens eines Fahrzeugs oder einer Komponente eines Fahrzeugs verwendet werden. Oftmals werden durch Kalibrierung die Fahreigenschaften eines Fahrzeugs (z.B. Geräusch, Fahrwerk, Dämpfung, Schaltverhalten, etc.) hinsichtlich gewünschter Eigenschaften optimiert. Als Beispiele seien eine Dämpfungsoptimierung, Getriebeoptimierung, Kupplungsoptimierung genannt. Beispielsweise kann die Steifigkeit eines Fahrwerks optimiert werden, indem die Federparameter (Steuervariablen) in Fahrwerklagern variiert werden, um bestimmte Ausgangsgrößen, wie z.B. die Fahrdynamik oder den Fahrkomfort, zu beeinflussen bzw. zu optimieren. Ein anderes Beispiel ist eine hydrodynamische Kupplung, wobei der Kupplungsfüllverlauf optimiert wird.

Die Kalibrierung ist aber auch nicht auf Komponenten eines Fahrzeugs beschränkt, sondern kann ganz allgemein für beliebige Maschinenkomponenten als technisches System angewendet werden.

Als technisches System für die Kalibrierung kommt daher insbesondere jede Komponente einer Maschine, z.B. eines Fahrzeugs, in Frage, das durch Steuervariablen beeinflusst werden kann und das hinsichtlich eines bestimmten Verhaltens in Abhängigkeit von einem Betriebszustand optimiert werden soll.

Es ist daher ein Ziel der gegenständlichen Erfindung ein Verfahren zur Kalibrierung eines technischen Systems anzugeben, das es ermöglicht auf Basis gültiger Datenpunkte auf einfache und rasche Weise die Einhaltung einer Datenhülle zu berücksichtigen.

Diese Aufgabe wird mit den Merkmalen des unabhängigen Anspruchs 1 gelöst. Durch die erfindungsgemäße Modellierung der Datenhülle kann die Überprüfung, ob ein optimierter Testpunkt innerhalb oder außerhalb der Datenhülle liegt mit geringem rechnerischem Aufwand durchgeführt werden. Das ermöglicht es, diese Überprüfung auch bei Versuchsräumen hoher Dimension (>10), wie es typischerweise bei der Kalibrierung technischer Systeme der Fall ist, durchzuführen.

Bei der Verwendung verschiedener Öffnungswinkel $\varphi_n$ für verschiedene Datenpunkte $\mathbf{x}_n$ oder radialer Basisfunktionen und der Interpolationsbedingung $\Phi \cdot \mathbf{c} = \mathbf{t}$ mit dem Vektor $\mathbf{t} = [t_1, ..., t_N]^T$ mit $t_i \in \{-1, 0, 1\}$, können auch Datenpunkte außerhalb der Datenhülle berücksichtigt werden, was die Modellierung des Bereichs innerhalb der Datenhülle genauer macht.

Die gegenständliche Erfindung wird nachfolgend unter Bezugnahme auf die Figuren 1 bis 3 näher erläutert, die beispielhaft, schematisch und nicht einschränkend vorteilhafte Ausgestaltungen der Erfindung zeigen. Dabei zeigt

Fig.1    die Veranschaulichung einer konischen Datenhülle,
Fig.2    eine konische lokale und globale Datenhülle und
Fig.3    die Veranschaulichung einer Datenhülle mit einer radialen Basisfunktion.

Einleitend sei erwähnt, dass es hinlänglich bekannte Methoden gibt, um einen Versuchsplan (auch als Design of Experiments (DoE) bekannt) in Form einer Anzahl von Steuervariablen zu erstellen, mit dem das technische System ideal angeregt werden kann, um die statischen und dynamischen Eigenschaften des technischen Systems optimal zu erfassen. Wird das technische System mit den Steuervariablen angeregt und dabei die Zustandsvariablen gemessen erhält man Datenpunkte $\mathbf{x}_n$, also in diesem Fall konkrete Messungen am technischen System. Ebenso gibt es hinlänglich bekannte Methoden, um ein Modell eines technischen Systems, bzw. einer Ausgangsgröße y des technischen Systems, anhand von verfügbaren Datenpunkten $\mathbf{x}_n$ zu identifizieren. Es können für technische Systeme auch bekannte, vorhandene Modelle genutzt werden. Mit dem Modell muss die Ausgangsgröße y nicht mehr gemessen werden, sondern kann auch für andere Eingangsgrößenvektoren aus dem Modell berechnet werden. Ebenso können mit einem Modell die Zustandsvariablen in Abhängigkeit von den Steuervariablen modelliert werden, womit es möglich ist, aus dem Modell weitere Datenpunkte $\mathbf{x}_n$ zu ermitteln. Oftmals werden der Versuchsplan und ein Modell auch gleichzeitig ermittelt. Beispiele hierfür finden sich in WO 2012/169972 A1 oder WO 2014/187828 A1. Für die gegenständliche Erfindung kommt es aber nicht auf die konkrete Art an wie man zu den Datenpunkten $\mathbf{x}_n$ kommt, sondern es wird davon ausgegangen, dass eine Vielzahl gültiger Datenpunkte $\mathbf{x}_n$ (also innerhalb der Fahrbarkeitsgrenze) vorliegen. Ebenso ist es für die Erfindung unerheblich, wie die Ausgangsgröße y ermittelt wird, beispielsweise messtechnisch oder aus einem geeigneten Modell.

Die Erfindung wird nun ohne Einschränkung der Allgemeinheit am Beispiel eines Verbrennungsmotors als technisches System beschrieben. Es wird davon ausgegangen, dass eine Vielzahl n = 1,...,N von gültigen (also innerhalb der Fahrbarkeitsgrenze liegenden) Datenpunkten $\mathbf{x}_n$ des technischen Systems vorhanden ist. Die Datenpunkte $\mathbf{x}_n$ können durch Messung auf einem Prüfstand für das technische System, beispielsweise auf einem Motorprüfstand für einen Verbrennungsmotor, oder anhand eines vorhandenen oder identifizierten Modells des technischen Systems ermittelt werden. In beiden Fällen ist es üblicherweise das Ziel, den Versuchsraum, also den Raum der Steuervariablen $\mathbf{u}_n$, in Abhängigkeit von den Zustandsvariablen $\mathbf{v}_n$, innerhalb der Fahrbarkeitsgrenze möglichst gut und gleichmäßig abzudecken.

Ein Datenpunkt $\mathbf{x}_n$ ist dabei jeweils ein Eingangsgrößenvektor $\mathbf{x}$ in Form konkreter Werte aller Steuervariablen u und konkreter Werte aller Zustandsvariablen $\mathbf{v}$, also $\mathbf{x}_n = \left[ \mathbf{u}_n^T, \mathbf{v}_n^T \right]^T$. Die Steuervariablen $\mathbf{u}_n$ und Zustandsvariablen $\mathbf{v}_n$ sind dazu ebenfalls in entsprechenden Vektoren zusammengefasst.

Die Kalibrierung ist dann ein Optimierungsproblem, das beispielsweise allgemein in der Form

$$\mathbf{u}(\mathbf{v}) = \arg\min_{\mathbf{u}} \mathbf{y}(\mathbf{x}) \quad \forall \mathbf{v} \in V$$

$$\mathbf{h}(\mathbf{x}) \leq 0$$

$$g(\mathbf{x}) \leq 0$$

angeschrieben werden kann. Dabei bezeichnet V den Zustandsraum gegeben durch die Zustandsvariablen $\mathbf{v}$. $\mathbf{h}$ und $\mathbf{g}$ sind vorgegebene Nebenbedingungen der Optimierung. Optimiert werden Ausgangsgrößen $y$ des technischen Systems, die in einem Ausgangsgrößenvektor $\mathbf{y}$ zusammengefasst sind, beispielsweise Emissionswerte, der Verbrauch, usw. eines Verbrennungsmotors. Es wird nach zumindest einer Ausgangsgröße $y$ optimiert, indem der Steuervariablenvektor $\mathbf{u}$ in Abhängigkeit von einem gegebenen Zustandsvariablenvektor $v$ variiert wird. Mit der Nebenbedingung $\mathbf{h}$ kann z.B. die Einhaltung zulässiger Betriebszustände des technischen Systems, wie beispielsweise Emissions- oder Verbrauchsgrenzen, ein maximaler Zylinderdruck, eine maximale Motortemperatur, Vermeidung von Klopfen, usw., vorgegeben werden und mit der Nebenbedingung $g$ kann eine Datenhülle, also z.B. das Einhalten einer Fahrbarkeitsgrenze, vorgegeben werden.

Die Kalibrierung wird in der Regel jeweils in einem vorgegebenen, festgehaltenen i-ten, $i = 1,...,I$ Betriebspunkt des technischen Systems, der durch einen vorgegebenen i-ten Zustandsvariablenvektor $\mathbf{v}_i$, der alle Zustandsvariablen $v$ enthält, gegeben ist, durchgeführt. Die Kalibrierung an festen Betriebspunkten erleichtert die Kalibrierung, da damit der zu variierene i-te Eingangsgrößenvektor $\mathbf{x}_i$ für die Kalibrierung zu $\mathbf{x}_i = [\mathbf{u}_i]^T$ vereinfacht werden kann. In gleicher Weise vereinfachen sich damit aber auch die Nebenbedingungen zu $h_i(\mathbf{u}_i)$ und $g_i(\mathbf{u}_i)$. In diesem Fall spricht man auch von lokaler Kalibrierung, da nur die für den jeweiligen i-ten Betriebspunkt geltenden Steuervariablen $\mathbf{u}_i$ berücksichtigt werden, nicht jedoch die Zustandsvariablen $\mathbf{v}_i$. Damit wird auch nur eine lokale Datenhülle berücksichtigt. Die lokale Datenhülle umfasst damit nur gültige Datenpunkte $\mathbf{x}_{ni}$ für den festgehaltenen i-ten Betriebspunkt. Das obige Optimierungsproblem für den i-ten Betriebspunkt vereinfacht sich dann zu

$$\mathbf{z}_i = \arg \min_{\mathbf{u}} \mathbf{y}_i(\mathbf{u}_i)$$

$$\mathbf{h}_i(\mathbf{u}_i) \leq 0 \qquad ,$$

$$g_i(\mathbf{u}_i) \leq 0$$

wobei $\mathbf{z}_i$ das Ergebnis der Optimierung für die Zustandsvariablen $\mathbf{v}_i$ bezeichnet. Dieses Optimierungsproblem wird für zumindest einen, vorzugsweise für jeden, der i Betriebspunkte gelöst. $\mathbf{z}_i$ bezeichnet dann die optimierten Steuervariablen für den aktuellen i-ten Betriebspunkt. Die Datenpunkte $\mathbf{x}_n$ werden bei der Kalibrierung nur für die Prüfung der Datenhülle in Form der Nebenbedingung $g_i(\mathbf{u}_i)$ benötigt. Der Nachteil dabei ist, dass dadurch an sich bekannte Information benachbarter Betriebspunkte systematisch ignoriert wird.

Daher werden in der Kalibrierung die Zustandsvariablen $\mathbf{v}_i$ oftmals als zusätzlicher Eingang berücksichtigt, womit sich ein Eingangsgrößenvektor $\mathbf{x}_i$ für die Kalibrierung in einem i-ten Betriebspunkt $\mathbf{v}_i$ zu $\mathbf{x}_i = \left[ \mathbf{u}_i^T, \mathbf{v}_i \right]^T$ ergibt. Bei der Kalibrierung wird wiederum der Steuervariablenvektor $\mathbf{u}_i$ in Abhängigkeit von einem gegebenen Zustandsvariablenvektor $\mathbf{v}_i$ variiert. In gleicher Weise ergeben sich die Nebenbedingungen im i-ten Betriebspunkt $\mathbf{v}_i$ zu $h(\mathbf{u}_i, \mathbf{v}_i)$ und $g(\mathbf{u}_i, \mathbf{v}_i)$. In diesem Fall spricht man auch von globaler Kalibrierung und es wird mit der Nebenbedingung $g(\mathbf{u}_i, \mathbf{v}_i)$ eine globale Datenhülle über alle Datenpunkte $\mathbf{x}_n$ berücksichtigt. Das Optimierungsproblem folgt dann für jeden der i Betriebspunkte $\mathbf{v}_i$ in der Form

$$\mathbf{z}_i(\mathbf{v}_i) = \arg \min_{\mathbf{u}} \mathbf{y}_i(\mathbf{u}_i, \mathbf{v}_i)$$

$$\mathbf{h}(\mathbf{u}_i, \mathbf{v}_i) \leq 0$$

$$g(\mathbf{u}_i, \mathbf{v}_i) \leq 0$$

wobei $\mathbf{z}_i(\mathbf{v}_i)$ das Ergebnis der Optimierung für die Zustandsvariablen $\mathbf{v}_i$ bezeichnet. Dieses Optimierungsproblem wird für zumindest einen, vorzugsweise für alle, i Betriebspunkte gelöst. Die Kalibrierung erfolgt damit ebenfalls bei einem bestimmten i-ten Betriebspunkt $\mathbf{v}_i$, nur wird nun über die Randbedingungen h bzw. g auch Information aus weiteren, insbesondere benachbarten, Betriebspunkten berücksichtigt. Dadurch werden die durch die Optimierung identifizierten Modelle der Ausgangsgrößen $\mathbf{y}$ genauer und die durch die globale Datenhülle vorgegebene Randbedingung g weniger restriktiv, wie weiter unten noch ausgeführt wird.

Die Ausgangsgrößen $\mathbf{y}$, bzw. $\mathbf{y}_i$, des technischen Systems sind jeweils ein Optimierungsziel bzw. ein Ziel der Kalibrierung, beispielsweise die Minimierung der Emissionen, wie z.B. einer NOx, COx, HC oder Ruß Emission eines Verbrennungsmotors, die Minimierung des Verbrauchs eines Verbrennungsmotors, usw. Der Zusammenhang zwischen Ausgangsgrößen $\mathbf{y}$, bzw. $\mathbf{y}_i$, und der Steuervariablen $\mathbf{u}$ und gegebenenfalls der Zustandsvariablen v wird durch die Kalibrierung identifiziert. Es gibt hinlänglich bekannte Verfahren zur Lösung der oben erwähnten Optimierungsprobleme, beispielsweise werden in der WO 2013/087307 A2 solche Verfahren beschrieben. Bei der Optimierung werden also die Steuervariablen u (Testpunkt z) gesucht, die hinsichtlich zumindest einer Ausgangsgröße y des technischen Systems optimal sind, wobei die Optimierung auf eine Minimierung oder Maximierung abzielt. Allgemein wird die Optimierung iterativ durchgeführt, bis ein definiertes Abbruchkriterium erreicht ist. Ein mögliches Abbruchkriterium ist z.B. eine bestimmte Anzahl von Iterationen oder das Erreichen bzw. Unterschreiten einer Zielvorgabe der Ausgangsgrößen $\mathbf{y}$, bzw. $\mathbf{y}_i$. Die Steuervariablen u zum Zeitpunkt des Eintreten des Abbruchkriteriums werden als optimale Steuervariablen u angesehen. Dabei wird in jedem Iterationsschritt auch die Einhaltung der Nebenbedingungen überprüft. Für die gegenständliche Erfindung kommt es aber nicht darauf an wie man das Optimierungsproblem löst.

Bei der Kalibrierung wird durch die Optimierung in jedem Iterationsschritt j der Optimierung für jeden der i Betriebspunkte $\mathbf{v}_i$ ein neuer Testpunkt $\mathbf{z}_j = \left[ \mathbf{u}_{ij}^T, \mathbf{v}_i^T \right]^T$ bzw. $\mathbf{z}_j = \mathbf{u}_{ij}^T$ ermittelt, unter Berücksichtigung der N vorhandenen Datenpunkte $\mathbf{x}_n$ für die Nebenbedingung g. Wird das vorgegebene Abbruchkriterium erreicht und erfüllt der neue Testpunkt $\mathbf{z}_j$ alle Nebenbedingungen, dann wird der letzte Testpunkt $\mathbf{z}_j$ zur optimierten Steuervariablen $\mathbf{z}_i$ im i-ten Betriebspunkt. Um bei der Kalibrierung die Einhaltung der Nebenbedingung g zu überprüfen, wird in jedem Iterationsschritt j geprüft, ob dieser neue Testpunkt $\mathbf{z}_j$ innerhalb der Datenhülle, also z.B. innerhalb der Fahrbarkeitsgrenze, liegt, oder außerhalb. Diese Überprüfung muss auch für hohe Dimensionen (>10) des durch die Steuervariablen $\mathbf{u}$ definierten Versuchsraums ausreichend schnell möglich sein. Dazu muss die Datenhülle D zuerst definiert werden.

In einem ersten erfindungsgemäßen Ansatz wird durch eine Funktion $f(\mathbf{z}_j)$ eine konische Datenhülle modelliert. Der neue Testpunkt $\mathbf{z}_j$ liegt außerhalb der Datenhülle, wenn die Bedingung

$$f(\mathbf{z}_j) = \max_{\forall \mathbf{x}_n} \mathbf{a}^T \cdot \frac{\mathbf{x}_n - \mathbf{z}_j}{\left\| \mathbf{x}_n - \mathbf{z}_j \right\|} < \cos \varphi$$

erfüllt ist. Der Parameter $\varphi$ modelliert die Größe bzw. das Volumen der Datenhülle. In der Regel wird die euklidische Norm $\|.\|_2$ verwendet, wobei auch andere Normen denkbar sind.

Dabei ist der Einheitsvektor $\mathbf{a}$ als $\dfrac{\mathbf{z}_j - c}{\left\| \mathbf{z}_j - c \right\|}$ definiert, mit einen Zentrum c der Datenpunkte $\mathbf{x}_n$.

Das Zentrum c kann z.B. der Schwerpunkt der n=1,...,N Datenpunkte $\mathbf{x}_n$ gemäß $c = \sum_{n=1}^{N} \dfrac{\mathbf{x}_n}{N}$ sein, kann ein lokales Zentrum einer Teilmenge der vorhandenen Datenpunkte $\mathbf{x}_n$ sein oder kann auch ein beliebig gewählter Punkt sein. Auch andere Definitionen für das Zentrum c kommen dabei in Frage. Der Vektor $\mathbf{a}$ ist damit ein Einheitsvektor, der vom Zentrum c in Richtung des Testpunktes $\mathbf{z}_j$ zeigt. In gleicher Weise ist $\dfrac{\mathbf{x}_n - \mathbf{z}_j}{\left\| \mathbf{x}_n - \mathbf{z}_j \right\|}$ ein Einheitsvektor, der vom Testpunkt $\mathbf{z}_j$ in Richtung eines vorhandenen Datenpunktes $\mathbf{x}_n$ zeigt. Das Skalarprodukt zweier Vektoren gibt bekanntermaßen den Winkel zwischen den beiden Vektoren an. Somit kann man sich einen vom Zentrum c wegweisenden Konus mit Spitze im Testpunktes $\mathbf{z}_j$ und mit einem Öffnungswinkel a, der durch die beiden Vektoren festgelegt ist, vorstellen. Es wird durch die obige Bedingung folglich geprüft, ob der größte Öffnungswinkel $\alpha = \arccos(f(z_j))$, der sich zwischen den Datenpunkten $\mathbf{x}_n$ und dem Testpunkt $\mathbf{z}_j$ ergibt, kleiner einem vorgegebenen Teilungswinkel $\varphi$ ist. Ist das der Fall, dann wird der Testpunkt $\mathbf{z}_j$ durch einen Teilungskonus mit Öffnungswinkel $\alpha$ gleich dem Teilungswinkels $\varphi$ von den Datenpunkten $\mathbf{x}_n$ getrennt, d.h. dass sich kein Datenpunkt $\mathbf{x}_n$ innerhalb dieses Teilungskonus befindet. Ist das der Fall, dann wird der Testpunkt $\mathbf{z}_j$ als außerhalb der Datenhülle angesehen.

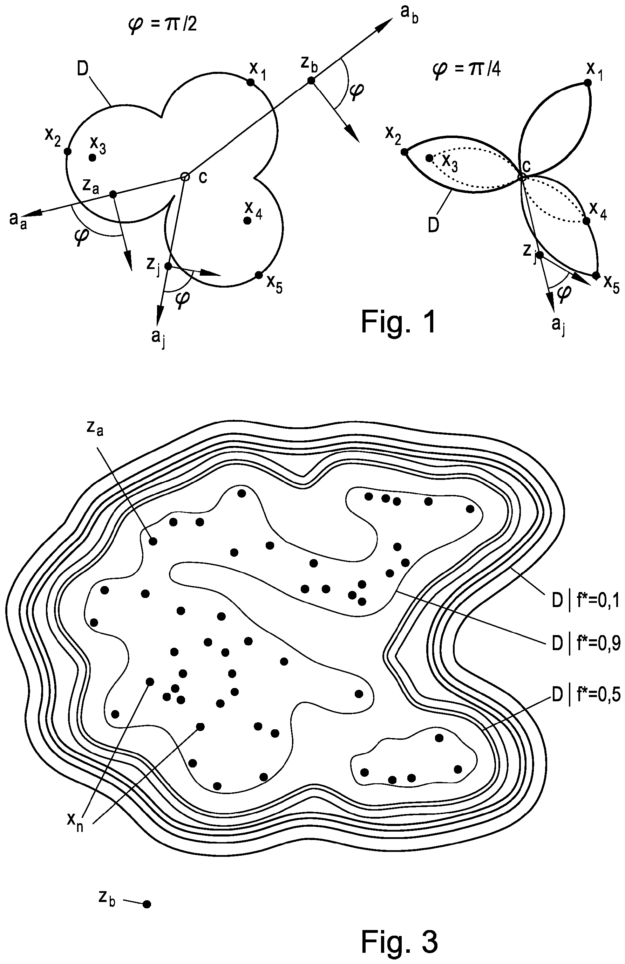

Das wird anhand der Fig.1 an einem einfachen Beispiel in Form von zweidimensionalen Datenpunkten $\mathbf{x}_n$ erläutert. Dabei ist links die Datenhülle D für einen Teilungswinkel $\varphi=90°$ und rechts für einen Teilungswinkel $\varphi=45°$ dargestellt. Dargestellt sind jeweils fünf Datenpunkte $\mathbf{x}_n$, n=1,...,5. Das Zentrum c ist als Schwerpunkt dieser fünf Datenpunkte $\mathbf{x}_n$ festgelegt worden. Die Datenhülle D ist in Fig.1 jeweils visualisiert. Zur Visualisierung wurden die Test-Datenpunkte $\mathbf{z}$ ermittelt, für die der größte Öffnungswinkel $\alpha=\varphi$ ist. Die Visualisierung der Datenhülle D dient jedoch nur der Veranschaulichung. Für eine Kalibrierung ist die Berechnung der Datenhülle D nicht notwendig, sondern es ist mit der obigen Bedingung nur erforderlich zu prüfen, ob ein Testpunkt $\mathbf{z}_j$ innerhalb oder außerhalb der Datenhülle D liegt. In Fig.1 links ist ein erster Testpunkt $\mathbf{z}_a$ innerhalb der Datenhülle D, weil es keinen Konus in Richtung Zentrum c mit Öffnungswinkel $\varphi$ gibt, der den Testpunkt $\mathbf{z}_a$ von den Datenpunkten $\mathbf{x}_n$ trennt (die Datenpunkte $\mathbf{x}_2$ und $\mathbf{x}_3$ liegen innerhalb des Konus). Ein zweiter Testpunkt $\mathbf{z}_b$ liegt außerhalb der Datenhülle D, weil es einen Konus mit Spitze in Richtung Zentrum c mit Öffnungswinkel $\varphi$ gibt, der den zweiten Testpunkt $\mathbf{z}_b$ von den Datenpunkten $\mathbf{x}_n$ trennt (keiner der Datenpunkte $\mathbf{x}_n$ liegt innerhalb des Konus). Aus Fig.1 geht auch noch der Einfluss des Teilungswinkels $\varphi$ auf die Datenhülle D hervor. Insbesondere wird durch den Teilungswinkel $\varphi$ das Volumen der Datenhülle D festgelegt.

Für die Berechnung von $f(\mathbf{z}_j)$ (und damit indirekt für die Datenhülle D) können entweder alle N vorhandenen Datenpunkte $\mathbf{x}_n$ verwendet werden, oder es werden nur eine Anzahl $A \in N$ von Datenpunkten $\mathbf{x}_n$ in der Nähe des Testpunktes $\mathbf{z}_j$ verwendet. Dabei können beispielsweise nur die Datenpunkte $\mathbf{x}_n$ für die Berechnung verwendet werden, die innerhalb eines definierten Bereichs um den Testpunkt $\mathbf{z}_j$ liegen. Im zweidimensionalen Fall könnte man sich diesen Bereich beispielsweise als Quadrat, Rechteck, Kreis, oder andere beliebige geometrische Form vorstellen. Das lässt sich natürlich auf jede höhere Dimension generalisieren. Es könnte aber einfach auch nur die A, dem Testpunkt $\mathbf{z}_j$ nächsten (z.B. gemäß dem euklidischen Abstand) Datenpunkten $\mathbf{x}_n$ gewählt werden. Wenn nicht alle N Datenpunkte $\mathbf{x}_n$ verwendet werden, dann wird das Zentrum c vorzugsweise auch nur für die gewählten A Datenpunkte $\mathbf{x}_n$ bestimmt.

Wenn alle N vorhandenen Datenpunkte $\mathbf{x}_n$ für die Berechnung von $f(\mathbf{z}_j)$ verwendet werden, dann ist die Komplexität für die Überprüfung eines Testpunktes $\mathbf{z}_j$ in der Größenordnung O(dN), wobei die d die Dimension des Testpunktes $\mathbf{z}_j$ angibt. Im Falle, dass nur $A \in N$ Datenpunkte $\mathbf{x}_n$ verwendet werden, ist die Komplexität für die Überprüfung eines Testpunktes $\mathbf{z}_j$ in der Größenordnung O(polylog N), wobei polylog den bekannten Polylogarithmus bezeichnet. Die Überprüfung eines Testpunktes $\mathbf{z}_j$ ist damit in beiden Fällen sehr rasch ausführbar.

Für den Fall, dass die Datenpunkte $\mathbf{x}_n$ für die Optimierung auch die Zustandsvariablen $\mathbf{v}_i$ umfassen, dann kann das Zentrum c für alle Betriebspunkte $\mathbf{v}_i$ der gleiche Punkt sein, oder das Zentrum c kann in geeigneter Weise vom aktuellen Betriebspunkt $\mathbf{v}_i$ in der Form $c = c(\mathbf{v}_i)$ abhängig sein.

Bei der Methode der konischen Datenhülle können auch unmögliche, also an sich außerhalb der Datenhülle D liegende, Testpunkte $\mathbf{z}_j$ berücksichtigt werden. Wenn Informationen über außerhalb der Datenhülle D, also außerhalb der Fahrbarkeitsgrenze liegende, Bereiche in der Modellierung (Kalibrierung) berücksichtigt werden, dann wird die Modellierung des Bereichs innerhalb der Datenhülle D genauer. Das kann erreicht werden, indem für verschiedene Datenpunkte $\mathbf{x}_n$, n=1, ..., N verschiedene Öffnungswinkel $\varphi_n$ verwendet werden, im Extremfall also für jeden Datenpunkte $\mathbf{x}_n$ ein anderer Öffnungswinkel $\varphi_n$. Der neue Testpunkt $\mathbf{z}_j$ liegt demnach außerhalb der Datenhülle D, wenn die Bedingung

$$f(\mathbf{z}_j) = \mathbf{a}^T \cdot \frac{\mathbf{x}_n - \mathbf{z}_j}{\left\| \mathbf{x}_n - \mathbf{z}_j \right\|} < \cos \varphi_n \quad \forall n = 1,...,N$$

erfüllt ist.

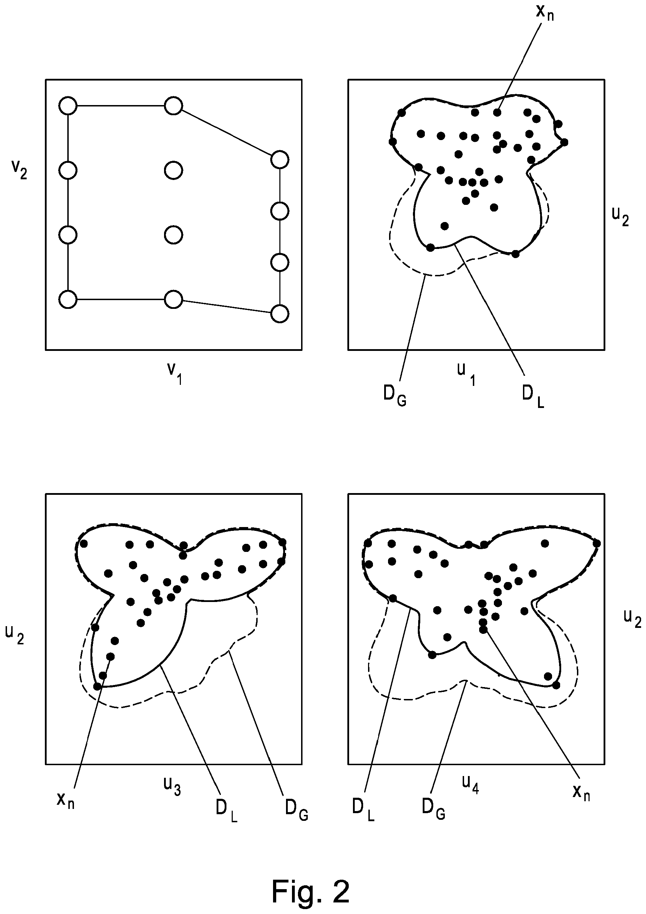

Mit Fig.2 wird noch der Unterschied zwischen einer lokalen und einer globalen Datenhülle erläutert. Dabei wird von einem technischen System mit zwei Zustandsvariablen $\mathbf{v}=[v_1, v_2]^T$ und vier Steuervariablen $\mathbf{u}=[u_1, u_2, u_3, u_4]^T$ ausgegangen. Als technisches System dient dabei beispielsweise ein Verbrennungsmotor mit den Zustandsvariablen $v_1$ in Form der Drehzahl und $v_2$ in Form des Drehmoments des Verbrennungsmotors. Als Steuervariablen werden beispielsweise $u_1$ in Form des Einspritzzeitpunktes, $u_2$ in Form des Zündzeitpunktes, $u_3$ in Form der Abgas-Rückführungsrate und $u_4$ in Form der Drosselklappenstellung. An insgesamt zwölf Betriebspunkten (Zustandsvariablen $\mathbf{v}$) wurden auf einem Prüfstand eine Reihe von Steuervariablen $\mathbf{u}$ Kombinationen eingestellt und dabei am Prüfstand eine Ausgangsgröße y, z.B. der Verbrauch, gemessen, um die Datenpunkte $\mathbf{x}_n$ zu erhalten. In Fig.2 links oben sind die zwölf Betriebspunkte $\mathbf{v}_i$ dargestellt. Die drei restlichen Diagramme zeigen jeweils Kombinationen von zwei der vier Steuervariablen $u_i$. In diesen Diagrammen sind jeweils die in diesen Ebenen liegenden Datenpunkte $\mathbf{x}_n$ dargestellt, wobei mit dem großen Punkten Datenpunkte $\mathbf{x}_n$ für einen der zwölf Betriebspunkte, z.B. den Betriebspunkt bei den jeweils kleinsten Werten der beiden Zustandsvariablen $v_1$, $v_2$, dargestellt sind. Die kleinen Punkte zeigen Datenpunkte $\mathbf{x}_n$ der anderen Betriebspunkte.

Mit den durchgezogenen Linien sind jeweils die lokalen Datenhüllen $D_L$ für den gewählten Betriebspunkt dargestellt. Die strichlierten Linien zeigen für den gewählten Betriebspunkt jeweils den Schnitt der globalen Datenhülle $D_G$ mit dem Betriebspunkt. Daraus erkennt man unmittelbar, dass die durch die globale Datenhülle $D_G$ definierten Nebenbedingungen g weniger restriktiv sind, als die die durch die lokale Datenhülle $D_L$ definierten.

In einem zweiten erfindungsgemäßen Ansatz werden zur Bestimmung, ob ein neuer Testpunkt $\mathbf{z}_j$ innerhalb oder außerhalb einer Datenhülle D liegt, radiale Basisfunktionen $\Phi$ verwendet. Eine radiale Basisfunktion $\Phi$ ist bekanntermaßen eine Funktion für die gilt $\phi(\mathbf{x}) = \phi(\|\mathbf{x}\|)$, wobei in der Regel die euklidische Norm $\|.\|_2$, oder auch eine beliebige andere Norm, verwendet wird. Dabei werden alle N Datenpunkte $\mathbf{x}_n$ gleichzeitig gemäß der Bedingung

$$f(\mathbf{z}_j) = \underbrace{\sum_{n=1}^{N} \mathbf{c}_n \cdot \phi\left(\left\|\mathbf{z}_j - \mathbf{x}_n\right\|_2\right)}_{\Phi \cdot \mathbf{c}} \geq f^*$$

bewertet. Als radiale Basisfunktionen können beispielsweise sogenannte Wendland Funktionen verwendet werden, wie in Wendland H., "Piecewise polynomial, positive definite and compactly supported radial functions of minimal degree", Advances in Computational Mathematics, December 1995, Volume 4, Issue 1, pp 389-396 beschrieben. Wendland Funktionen sind in diesem Zusammenhang praktisch, da sich das ergebende Gleichungssystem numerisch sehr effizient lösen lässt. Dieser erfindungsgemäße Ansatz zur Bestimmung der Datenhülle D ist allerdings unabhängig von der Wahl der radialen Basisfunktionen.

Die Funktion $f(\mathbf{z}_j)$ modelliert wiederum eine Datenhülle D. Ein neuer Testpunkt $\mathbf{z}_j$ liegt innerhalb der Datenhülle D, wenn die obige Bedingung für den Testpunkt $\mathbf{z}_j$ erfüllt ist. $f^* \in \Box_0^+$ bezeichnet die Konturlinie, welche die Datenhülle D definiert. Ist f* klein, dann ist die Datenhülle D groß, und vice versa. Ist f*=1, dann liegt die Konturlinie auf den Datenpunkten $\mathbf{x}_n$. Ist f*=0, dann liegt die Konturlinie in einem Abstand, der sich aus den gewählten radiale Basisfunktionen ergibt, von den Datenpunkten $\mathbf{x}_n$ entfernt. Die Koeffizienten $\mathbf{c}_n=[c_1, ..., c_N]^T$ können dabei aus der Interpolationsbedingung $\Phi \cdot \mathbf{c}=\mathbf{t}$ ermittelt werden, wobei der Vektor $\mathbf{t}=[1, ..., 1]T$ und $\Phi_{ij} = \phi(x_i, x_j)$ die bekannte N × N Gramsche Matrix bezeichnet, also

$$\Phi(x_1, ..., x_n) = \begin{vmatrix} \phi(x_1, x_1) & \phi(x_1, x_2) & ... & \phi(x_1, x_n) \\ \phi(x_2, x_1) & \phi(x_2, x_2) & ... & \phi(x_2, x_n) \\ \vdots & \vdots & \ddots & \vdots \\ \phi(x_n, x_1) & \phi(x_n, x_2) & ... & \phi(x_n, x_n) \end{vmatrix}.$$

Das wird anhand der Fig.3 an einem einfachen Beispiel in Form von zweidimensionalen Datenpunkten $\mathbf{x}_n$, die als schwarze Punkte dargestellt sind, erläutert. Es sind mehrere Datenhüllen D für verschiedene f* aus dem Bereich [0, 1] dargestellt. Je kleiner f*, umso größer wird die Datenhülle D um die vorhandenen Datenpunkte $\mathbf{x}_n$. Die Datenhüllen D werden wiederum nur zur Veranschaulichung visualisiert, indem die Testpunkte $\mathbf{z}_j$ ermittelt werden, für die gilt $f(\mathbf{z}_j)$=f*. Für die Kalibrierung ist es nicht notwendig die Datenhülle D zu berechnen. Der Testpunkt $\mathbf{z}_a$ liegt innerhalb der Datenhülle D, weil dafür die Bedingung erfüllt ist. Der Testpunkt $\mathbf{z}_b$ liegt außerhalb, weil die Bedingung dafür nicht erfüllt ist.

Bei dieser Methode können auch unmögliche, also an sich außerhalb der Datenhülle D liegende, Testpunkte $\mathbf{z}_j$ berücksichtigt werden. Wenn Informationen über außerhalb der Datenhülle D, also außerhalb der Fahrbarkeitsgrenze liegende, Bereiche in der Modellierung berücksichtigt werden, dann wird die Modellierung des Bereichs innerhalb der Datenhülle D genauer. Das kann erreicht werden, indem die Interpolationsbedingung zu $\Phi \cdot \mathbf{c}=\mathbf{t}$, mit einem Zielvektor $\mathbf{t}=[t_1, ..., t_N]^T$ und $t_i \in \{-1, 0, 1\}$, geändert wird. Dabei wird mit $t_i$=-1 ein nicht fahrbarer Datenpunkt angegeben, mit $t_i$=1 ein fahrbarer Datenpunkt und mit $t_i$=0 können Bereiche angegeben werden, in denen keine Kenntnis über die Datenpunkte vorliegen. Die Punkte können z.B. explizit als Randpunkte vorgegeben sein.

Werden als radiale Basisfunktionen Wendland Funktionen verwendet, dann ist die Komplexität für die Überprüfung eines Testpunktes $\mathbf{z}_j$ wiederum in der Größenordnung O(polylog N), was wiederum eine rasche Überprüfung sicherstellt.

**Patentansprüche**

1. Verfahren zur Kalibrierung eines technischen Systems, das durch eine Anzahl von Steuervariablen (u) gesteuert wird und sich in Abhängigkeit der Steuervariablen (u) ein Betriebspunkt in Form einer Anzahl von Zustandsvariablen (v) einstellt, wobei bei der Kalibrierung in einem Betriebspunkt durch eine Optimierung unter Einhaltung vorgegebener Nebenbedingungen (h, g) die Steuervariablen (u) gesucht werden, die hinsichtlich zumindest einer Ausgangsgröße (y) des technischen Systems optimal sind, wobei mit einer Nebenbedingung (g) der Optimierung geprüft wird, ob ein bei der Optimierung berechneter Testpunkt ($z_j$) mit Steuervariablen (u) innerhalb einer Datenhülle (D) um eine Anzahl vorhandener Datenpunkte ($x_n$) des technischen Systems liegt, **dadurch gekennzeichnet, dass** die Daten-

$$f(z_j) = \max_{\forall x_n} \mathbf{a}^T \cdot \frac{\mathbf{x}_n - \mathbf{z}_j}{\|\mathbf{x}_n - \mathbf{z}_j\|} \qquad \mathbf{a} = \frac{\mathbf{z}_j - \mathbf{c}}{\|\mathbf{z}_j - \mathbf{c}\|}$$

hülle (D) durch eine der beiden Funktionen , mit und einem vorgege-

$$f(\mathbf{z}_j) = \sum_{n=1}^{N} \mathbf{c}_n \cdot \phi\left(\|\mathbf{z}_j - \mathbf{x}_n\|_2\right)$$

benen Zentrum (**c**) der Datenpunkte ($x_n$), oder , mit einer radialen Basisfunktion ($\phi$) und Koffezienten ($c_n$), modelliert wird **und dass** der Testpunkt ($z_j$) als innerhalb der Datenhülle (D) angesehen

$$f(\mathbf{z}_j) = \max_{\forall x_n} \mathbf{a}^T \cdot \frac{\mathbf{x}_n - \mathbf{z}_j}{\|\mathbf{x}_n - \mathbf{z}_j\|} \geq \cos\varphi \qquad f(\mathbf{z}_j) = \underbrace{\sum_{n=1}^{N} \mathbf{c}_n \cdot \phi\left(\|\mathbf{z}_j - \mathbf{x}_n\|_2\right)}_{\Phi \cdot \mathbf{c}} \geq f^*$$

wird, wenn die Bedingung oder , mit vorgegebenem Öffnungswinkel ($\varphi$) oder vorgegebener Konturlinie ($f^*$), erfüllt wird.

2. Verfahren nach Anspruch 1, **dadurch gekennzeichnet, dass** als Zentrum (**c**) der Schwerpunkt der n=1,...,N Da-

$$\mathbf{c} = \sum_{n=1}^{N} \frac{\mathbf{x}_n}{N}$$

tenpunkte ($x_n$) gemäß , ein lokales Zentrum einer Teilmenge der vorhandenen Datenpunkte ($x_n$) oder ein beliebig gewählter Datenpunkt ($x_n$) verwendet wird.

3. Verfahren nach Anspruch 1, **dadurch gekennzeichnet, dass** für verschiedene Datenpunkte ($x_n$) verschiedene Öffnungswinkel ($\varphi_n$) verwendet werden und der Testpunkt ($z_j$) als innerhalb der Datenhülle (D) angesehen wird, wenn die Bedingung

$$f(\mathbf{z}_j) = \mathbf{a}^T \cdot \frac{\mathbf{x}_n - \mathbf{z}_j}{\|\mathbf{x}_n - \mathbf{z}_j\|} \geq \cos\varphi_n$$

erfüllt wird.

4. Verfahren nach Anspruch 1, **dadurch gekennzeichnet, dass** die Koeffizienten $\mathbf{c}_n = [c_1, ..., c_N]^T$ aus der Interpolationsbedingung $\Phi \cdot \mathbf{c} = \mathbf{t}$ ermittelt werden, wobei der Vektor $\mathbf{t} = [1, ..., 1]^T$ oder $\mathbf{t} = [t_1, ..., t_N]^T$ mit $t_i \in \{-1, 0, 1\}$ ist.

**Claims**

1. Method for calibrating a technical system which is controlled by a number of control variables (u) and, depending on the control variables (u), an operating point in the form of a number of state variables (v) is set, the control variables (u), which are optimal with regard to at least one output variable (y) of the technical system, being searched for during the calibration at an operating point by optimization while maintaining predetermined secondary conditions (h, g), whereas a secondary condition (g) of the optimization is used to check whether a test point calculated during the optimization ($z_j$) with control variables (u), lies inside a data envelope (D) around a number of existing data points ($x_n$) of the technical system, **characterized in that** the data envelope (D) is modelled by one of the two functions

$$f(z_j) = \max_{\forall x_n} \mathbf{a}^T \cdot \frac{\mathbf{x}_n - \mathbf{z}_j}{\|\mathbf{x}_n - \mathbf{z}_j\|} \qquad \mathbf{a} = \frac{\mathbf{z}_j - \mathbf{c}}{\|\mathbf{z}_j - \mathbf{c}\|}$$

, with and a predetermined center (**c**) of the data points ($x_n$), or

$$f(\mathbf{z}_j) = \sum_{n=1}^{N} c_n \cdot \phi\left(\left\|\mathbf{z}_j - \mathbf{x}_n\right\|_2\right)$$

, with a radial basis function ($\phi$) and coefficients ($c_n$), **and in that** the test point

$$f(\mathbf{z}_j) = \max_{\forall \mathbf{x}_n} \mathbf{a}^T \cdot \frac{\mathbf{x}_n - \mathbf{z}_j}{\left\|\mathbf{x}_n - \mathbf{z}_j\right\|} \geq \cos \varphi$$

($z_j$) is considered to be inside the data envelope (D) if the condition $\qquad$ or

$$f(\mathbf{z}_j) = \underbrace{\sum_{n=1}^{N} c_n \cdot \phi\left(\left\|\mathbf{z}_j - \mathbf{x}_n\right\|_2\right)}_{\Phi \cdot c} \geq f^*$$

, with a predetermined opening angle ($\varphi$) or a predetermined contour line ($f^*$), is met.

2. Method according to claim 1, **characterized in that** the center of gravity of the n=1, ..., N data points ($\mathbf{x}_n$) according

to $$c = \sum_{n=1}^{N} \frac{\mathbf{x}_n}{N}$$ , a local center of a subset of the existing data points ($\mathbf{x}_n$), or an arbitrarily chosen data point ($\mathbf{x}_n$) is used as the center (c).

3. Method according to claim 1, **characterized in that** different opening angles ($\varphi_n$) are used for different data points ($\mathbf{x}_n$) and the test point ($z_j$) is considered to be inside the data envelope (D) if the condition

$$f(\mathbf{z}_j) = \mathbf{a}^T \cdot \frac{\mathbf{x}_n - \mathbf{z}_j}{\left\|\mathbf{x}_n - \mathbf{z}_j\right\|} \geq \cos \varphi_n$$

is met.

4. Method according to claim 1, **characterized in that** the coefficients $c_n = [c_1, ..., c_n]^T$ are determined from the interpolation condition $\Phi \cdot \mathbf{c} = \mathbf{t}$, the vector being $\mathbf{t} = [1, ..., 1]^T$ or $\mathbf{t} = [t_1, ..., t_N]^T$ with $t_i \in \{-1, 0, 1\}$.

**Revendications**

1. Procédé d'étalonnage d'un système technique qui est commandé par un nombre de variables de commande (u) et, en fonction des variables de commande (u), un point de fonctionnement est réglé sous la forme d'un nombre de variables d'état (v), les variables de commande (u) qui sont optimales par rapport à au moins une grandeur de sortie (y) du système technique étant recherchées lors de l'étalonnage au niveau d'un point de fonctionnement par une optimisation en respectant des conditions secondaires (h, g) prédéfinies, une condition secondaire (g) de l'optimisation permettant de vérifier si un point de test ($z_j$) calculé lors de l'optimisation avec des variables de commande (u) se trouve dans une enveloppe de données (D) autour d'un nombre de points de données ($\mathbf{x}_n$) existants du système technique, **caractérisé en ce que** l'enveloppe de données (D) est modélisée par l'une des deux fonctions

$$f(\mathbf{z}_j) = \max_{\forall \mathbf{x}_n} \mathbf{a}^T \cdot \frac{\mathbf{x}_n - \mathbf{z}_j}{\left\|\mathbf{x}_n - \mathbf{z}_j\right\|} \qquad \mathbf{a} = \frac{\mathbf{z}_j - c}{\left\|\mathbf{z}_j - c\right\|}$$

, avec $\qquad$ et un centre (c) prédéfini des points de données ($\mathbf{x}_n$), ou

$$f(\mathbf{z}_j) = \sum_{n=1}^{N} c_n \cdot \phi\left(\left\|\mathbf{z}_j - \mathbf{x}_n\right\|_2\right)$$

, avec une fonction de base radiale ($\phi$) et des coefficients ($c_n$), **et en ce que** le point de test ($z_j$) est considéré comme se trouvant dans l'enveloppe de données (D) lorsque la condition

$$f(\mathbf{z}_j) = \max_{\forall \mathbf{x}_n} \mathbf{a}^T \cdot \frac{\mathbf{x}_n - \mathbf{z}_j}{\left\|\mathbf{x}_n - \mathbf{z}_j\right\|} \geq \cos \varphi \qquad f(\mathbf{z}_j) = \underbrace{\sum_{n=1}^{N} c_n \cdot \phi\left(\left\|\mathbf{z}_j - \mathbf{x}_n\right\|_2\right)}_{\Phi \cdot c} \geq f^*$$

ou $\qquad$ , avec un angle d'ouverture ($\varphi$) prédéfini ou une ligne de contour ($f^*$) prédéfinie, est remplie.

2. Procédé selon la revendication 1, **caractérisé en ce que** le centre de gravité des n = 1, ..., N points de données

$(x_n)$ selon $c = \sum_{n=1}^{N} \frac{x_n}{N}$, un centre local d'un sous-ensemble des points de données $(x_n)$ existants ou un point de données $(x_n)$ choisi arbitrairement est utilisé comme centre $(c)$.

3.  Procédé selon la revendication 1, **caractérisé en ce que** des angles d'ouverture $(\varphi_n)$ différents sont utilisés pour différents points de données $(x_n)$ et le point de test $(z_j)$ est considéré comme se trouvant dans l'enveloppe de

$$f(z_j) = a^T \cdot \frac{x_n - z_j}{\|x_n - z_j\|} \geq \cos \varphi_n$$

données (D) lorsque la condition est remplie.

4.  Procédé selon la revendication 1, **caractérisé en ce que** les coefficients $c_n = [c_1, ..., c_n]^T$ sont déterminés à partir de la condition d'interpolation $\Phi \cdot c = t$, le vecteur étant $t = [1, ..., 1]^T$ ou $t = [t1, ..., t_N]^T$ avec $t_i \in \{-1, 0, 1\}$.

Fig. 1

Fig. 3

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012169972 A1
- WO 2014187828 A1
- WO 2013087307 A2

**In der Beschreibung aufgeführte Nicht-Patentliteratur**

- **G. KAMPMANN et al.** Support Vector Machines for Design Space Exploration. *Proceedings of the World Congress on Engieneering and Computer Science,* Oktober 2012, vol. II
- **H. EDELSBRUNNER et al.** Three-Dimensional Alpha Shapes. *ACM Transactions on Graphics,* Januar 1994, vol. 13 (1), 43-72
- **WENDLAND H.** Piecewise polynomial, positive definite and compactly supported radial functions of minimal degree. *Advances in Computational Mathematics,* Dezember 1995, vol. 4 (1), 389-396